Europäisches Patentamt

European Patent Office

Office européen des brevets

(11) Veröffentlichungsnummer: **0 256 366 B1**

# EUROPÄISCHE PATENTSCHRIFT

(45) Veröffentlichungstag der Patentschrift: **11.12.91**

(51) Int. Cl.5: **C08G 69/00**, C02F 5/14

(21) Anmeldenummer: **87110845.2**

(22) Anmeldetag: **27.07.87**

(54) **Verfahren zur Herstellung von Polyasparaginamidsäure und ihren Salzen.**

(30) Priorität: **07.08.86 DE 3626672**

(43) Veröffentlichungstag der Anmeldung:
**24.02.88 Patentblatt 88/08**

(45) Bekanntmachung des Hinweises auf die
Patenterteilung:
**11.12.91 Patentblatt 91/50**

(84) Benannte Vertragsstaaten:
**CH DE FR GB LI**

(56) Entgegenhaltungen:
**EP-A- 25 551**
**US-A- 3 052 655**

**M.Dessaignes,**
**Comp.rend.31,S.433(1850),I.Kovacs u.a.**
**(1961) J.Org.Chem.,26,S.1084**

(73) Patentinhaber: **BAYER AG**

**W-5090 Leverkusen 1 Bayerwerk(DE)**

(72) Erfinder: **Boehmke, Günther, Dr.**
**Kurt-Schumacher-Ring 152**
**W-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zur Herstellung von Polyasparaginamidsäure und ihren Salzen.

Das Verfahren zur Herstellung von Polyasparaginamidsäure und ihren Salze ist dadurch gekennzeichnet, daß man Maleinsäure und Ammoniak im Molverhältnis 1:1-1,5 bei 125-140°C umsetzt und gegebenenfalls die Säure in ihre Salze überführt.

Die Umsetzung erfolgt durch Erhitzen von Maleinsäure oder Maleinsäureanhydrid, das während des Aufheizens mit Wasser in Maleinsäure übergeht, und Ammoniak zu einer trockenen Schmelze der Mono- bis Bisammoniumsalze, die bei steigender Temperatur bei 125-140°C in die erfindungsgemäße Polyasparaginamidsäure übergehen.

Vorzugsweise wird die Temperatur innerhalb von 4-6 Stunden auf 125-135°C gesteigert und 0-2 Stunden in dieser Höhe belassen.

Die Schmelze wird mit steigender Kondensation zäh bis fest. Bei Temperaturen über 140°-160°C beginnt eine $CO_2$-Abspaltung, die die Schmelze aufbläht.

In geeigneten Apparaturen kann diese lockere Masse direkt zu einem körnigen Pulver zerschlagen werden, z.B. in Venuleth-Apparaten mit umlaufenden Schabern, heizbaren Förderschnecken, geneigt aufgestellten Drehrohröfen, Sprühapparaten, deren Lufteintrag über 140°C erhitzt werden kann.

Die Kondensation wird unterstützt, wenn gegen Ende der Reaktion Vakuum angelegt wird. Außerdem wirkt es sich günstig aus, wenn das sehr poröse Festprodukt zerkleinert wird, damit die Wärmeübertragung ausreichend ist und das Kondensationswasser abgeführt werden kann.

Eine besonders günstige Verfahrensweise ist die Erhaltung der Schmelze durch eine der fortschreitenden Reaktion angepaßte Temperaturführung. Wenn man nach Abdampfen des Lösungswassers, eventuell auch im Vakuum, unter Normaldruck das Salz bei 110-115°C schmilzt und unter Überleiten eines Inertgases, z.B. Stickstoff oder Kohlensäure, für eine gute Destillation des Kondensationswassers sorgt, wobei die Temperatur auf 128-132°C gesteigert wird, gelingt es, die Kondensation in einer rührbaren Schmelze durchzuführen.

Beim Abdestillieren des Wassers in der ersten Reaktionsstufe destilliert auch ein Teil des Ammoniaks mit. Die Ammoniakmenge wird darum so bemessen, daß mindestens eine der Carboxylgruppen der Maleinsäure in das Ammoniumsalz überführt wird.

Die erfindungsgemäßen Säuren werden mit einer Ausbeute von 90-96 % der Theorie erhalten. Diese läßt sich noch steigern, wenn man die sublimierten sauren Ammoniumsalze bzw. Maleinsäureanhydridsublimat in folgende Ansätze rückführt.

Zur Herstellung der erfindungsgemäßen Salze trägt man am vorteilhaftesten die wäßrige Lösung oder Aufschlämmung von Metall- oder Ammoniumhydroxiden nach der oben beschriebenen Kondensation und nach dem Abkühlen auf 100-120°C in die Schmelze ein. In kurzer Zeit gelingt es, die wäßrigen Lösungen der Salze der Polyasparaginamidsäure, beispielsweise 30-60 gew.-%ige Lösungen von Na-, K-, Li-, Mg-, Ca-, Ammonium-, Alkylammonium-, Hydroxyalkylammonium-, Zn- und Fe-Salzen herzustellen.

Die freie Polyasparaginamidsäure kann auch nach erfolgter Isolierung, Pulverisierung und Trocknung mit den Carbonaten oder pulverförmigen Hydroxiden der Metallionen in äquimolaren Mengen gemischt werden. Bei der Auflösung in Wasser erfolgt die Neutralisation.

Die erfindungsgemäßen Produkte können durch Säurebehandlung, beispielsweise Salzsäurebehandlung, in d,1-Asparaginsäure überführt werden.

Zur Neutralisation von 1 g der erfindungsgemäßen Polyasparaginamidsäuren werden 450-500 mg KOH benötigt. Ein Polykondensationsprodukt, dessen eine Carboxylgruppe (bezogen auf die Anzahl der Carboxylgruppen der eingesetzten Maleinsäure) vollständig in die Polyamidkette überführt wurde und dessen andere Carboxylgruppe in der Säureform vorliegt, benötigt 487 mg KOH/g.

Die Molekulargewichtsbestimmung nach der gelchromatischen Analyse ergibt - verglichen mit einem Polyethylenglykol-Standard - Molgewichte von 1.000 bis 4.000 mit einer Häufung von 1.800 bis 2.000. Dies entspricht 15-20 Asparaginamidsäure-Einheiten im Molekül der erfindungsgemäßen Verbindungen.

Die Polyasparaginamidsäure zeigt im IR-Spektrum eine starke Bande bei 6,1 μm für die Amidgruppe, die durch eine weitere bei 5,8 μm für die Säuregruppe ergänzt wird.

Wegen der relativ guten Löslichkeit in Wasser läßt sich die freie Säure zur Entfernung von Verkrustungen durch Härtebildner des Wassers in Industrie und Haushalt einsetzen, da die Salze leicht löslich sind und die Gefährdung wie bei starken Säuren fehlt.

Auch in automatischen Geschirrspülmaschinen können das Blindwerden von Glas- und Porzellangegenständen verhindert und die Belastung des Abwassers durch Phosphate oder Phosphonate vermieden werden.

Die K-, Mg- und Ca-Salze sind als Düngemittel geeignet.

Kondensationsprodukte der Asparaginsäure sind bekannt. E. Schaal (A. 157, S. 24 [1871]) beschreibt, daß beim Erhitzen von Asparagin-Hydrochlorid auf 180°C und dem Behandeln des Rückstandes mit Wasser ein wasserunlösliches Kondensationsprodukt zurückbleibt, dem er eine 4-8-fache Kondensation zuerkannte. Aus Asparaginsäure entsteht nach I. Kovacs u.a. (J. Org. Chem., 26, S. 1084 [1961]) durch Erhitzen auf 200° C im Vakuum in 120 Stunden oder in siedendem Tetralin in 100 Stunden eine Polysäure bzw. ein Polyamid der Asparaginsäure. Ein weiterer Weg wird von M. Frankel u. A. Berger (J. Org. Chem., 16, S. 1513 [1951]) aufgezeigt. Der Benzylester der N-Carboxyanhydrid-asparaginsäure wird durch Erhitzen in einen Polyamido-benzylester überführt. Bei der Verseifung bleibt die Peptidbindung erhalten, und die Estergruppierung wird unter Bildung einer Polyamidsäure verseift.

Nach M. Dessaignes (Comp. rend. 31, S. 433 [1850]) entstehen bei der trockenen Destillation der sauren Ammoniumsalze der Apfel-, Fumar- oder Maleinsäure bei 200° C Kondensationsprodukte, die durch Behandlung mit Salpeter- oder Salzsäure Asparaginsäure ergeben.

In der US-A-3 052 655 wird die Herstellung von Polyimiden durch Umsetzung vn α-Aminocarbonsäuren mit Asparaginsäure bei Temperaturen von 160° C bis 210° C beschrieben, wobei die Ausbeuten an der unteren Temperaturgrenze schlecht sind.

Das erfindungsgemäße Verfahren zur Herstellung der Polyasparaginamidsäure stellt ein technisch einfaches Verfahren dar, das mit gut zugänglichen Ausgangsprodukten, wenig Energieaufwand und geringem Abwasser zum Endprodukt führt.

Beispiel 1:

In einem Rührerkolben werden 98 g Maleinsäureanhydrid und 50 g Wasser unter Rühren erwärmt. Bei 50°-55° C tritt unter Aufschmelzen des Anhydrids eine Erwärmung auf ca. 75° C ein. Maß läßt etwa 30 Min. bei diesen Temperaturen und gibt dann 1 Mol Ammoniak-Lösung (= 68 g 25 %ig) zu, so daß kein Ammoniak durch Entgasen verloren geht. Die erhaltene Lösung des sauren Ammoniumsalzes der Maleinsäure wird im Vakuum zur Trockne eingedampft. Der erhaltene Kristallbrei wird ohne Vakuum bis zur Schmelze weiter erhitzt. Dabei wird bei Temperaturen von 110° C -120° C das Kristallwasser und schon Kondenswasser abdestilliert. Nach ca. 1 Stunde wird lamgsam Vakuum angelegt und die Temperatur der Schmelze auf 130°-135° C gesteigert. Mit dem beginnenden Zähwerden muß das Rührwerk aus der Schmelze gezogen werden. Man hält die Temperatur bei vollem Vakuum 4 Stunden. Die Masse ist porig und läßt sich leicht zu einem Pulver zerdrücken.

Die Ausbeute beträgt 108 g. Einige Gramm Sublimat sind im oberen Teil und im Kühler niedergeschlagen, die zu einem folgenden Ansatz eingesetzt werden konnten. Bei einer Titration werden für 1 g Produkt 478 mg KOH zur Neutralisation benötigt.

10 g des Produktes lösen sich in 100 g Wasser, wenn mit 2 g Natronlauge eine teilweise Neutralisation erfolgt, oder wenn man 10 g in 100 g Wasser erhitzt.

Der theoretische Stickstoffgehalt liegt beim Äquivalentgewicht von 115 bei 12,17 %; gefunden wurde 12,01 %.

Beispiel 2:

Die in Beispiel 1 gegebenen Einsätze werden wiederholt, jedoch wird die Lösung des sauren Ammoniumsalzes ohne Vakuum eingedampft. Die ab 115° C in eine Schmelze übergehende Kristallanschlämmung wird innerhalb von 5 Stunden unter Überleiten eines Inertgases (Stickstoff, Kohlensäure) langsam bis auf 128°-132° C erhitzt.

Die Kondensation wird durch die Menge des abdestillierenden Wassers und den Anstieg der Viskosität der Schmelze angezeigt. Nach 5 Stunden wird in einer Probe von 1 g der Verbrauch von KOH mit 490 mg gemessen.

Die schwach rötlich gefärbte Schmelze erstarrt glasig und kann durch ihre Sprödigkeit leicht zerkleinert werden.

Zur Herstellung des Nariumsalzes gibt man vorteilhafterweise die Natronlauge nach Beendigung der Reaktion zu, wenn der Ansatz auf 120° C abgekühlt ist. Zur Herstellung einer 50 gew.-%igen wäßrigen Lösung werden 28 g Wasser und 80 g einer 45 %igen Natronlauge benötigt.

Zur Herstellung des Monoethanolaminsalzes werden 53 g Monoethanolamin und 55 g Wasser eingesetzt.

Das Ammoniumsalz kann nur aus dem erkalteten Ansatz und einer Ammoniak-Lösung hergestellt werden, da in der Hitze viel Ammoniak entweichen würde.

Beispiel 3:

In einem Schaufeltrockner werden 19,6 kg Maleinsäureanhydrid und 19,6 kg Wasser eingetragen. Man erhitzt eine Stunde auf 90°-95° C, um das Anhydrid aufzuspalten. Zur Bildung des sauren Ammoniumsalzes werden 14 kg Ammoniak-Lösung, 25 %ig, eingedrückt. Nach Entspannung destilliert man das Lösungswasser bis 115° C ab und steigert in 5 Stunden die Temperatur auf 126°-128° C Innentemperatur. Dabei destilliert das Kondensatwasser ab.

Durch Anlegen von Vakuum schäumt die glasige Schmelze auf und wird durch die Mechanik des Schaufeltrockners zu einem Pulver zerschlagen.

Hieraus läßt sich auch durch die Mischung mit Alkalicarbonaten oder Erdalkalihydroxiden bzw. -

carbonaten eine Pulvermasse herstellen, die beim Auflösen in Wasser die entsprechenden leicht wasserlöslichen Salze bildet.

Beispiel 4:

In einem Rührkolben werden 98 g Maleinsäureanhydrid und 50 g Wasser unter Rühren erwärmt. Bei 50° - 55°C tritt unter Aufschmelzen des Anhydrids eine Erwärmung auf ca. 75°C ein. Man läßt etwa 30 Min. bei diesen Temperaturen und gibt dann 2 Mol Ammoniak-Lösung (= 136 g 25 %ig) so zu, daß kein Ammoniak durch Entgasen verloren geht. Die erhaltene Lösung des neutralen Ammoniumsalzes wird wie in Beispiel 1 unter Überleiten eines Inertgases auf 128° - 132°C erhitzt.

Mit dem abdestillierten Wasser entweichen ca. 0,6 Mol des Ammoniaks. Nach 5 Stunden wird aus der zähen Schmelze eine Probe entnommen. Diese verbraucht für 1 g etwa 196 mg KOH zur Neutralisation. Die Schmelze kann auch vor dem Erstarren bei 120° - 110°C mit 170 g Wasser zu einer 40 %igen Lösung aufgenommen werden.

Die Lösung reagiert sauer, pH 3, und eignet sich zur Entfernung von Kalkablagerungen.

Man kann aber auch mit den genannten Basen neutral stellen und erhält Mischsalze der Polyasparaginamidsäure.

## Patentansprüche

1. Verfahren zur Herstellung von Polyasparaginamidsäure und ihren Salzen, dadurch gekennzeichnet, daß man Maleinsäure und Ammoniak im Molverhältnis 1:1-1,5 bei 125-140°C umsetzt und die Säuren gegebenenfalls in ihre Salze überführt.

2. Verfahren zur Herstellung von Polyasparaginamidsäure nach Anspruch 1, dadurch gekennzeichnet, daß man Maleinsäure und Ammoniak innerhalb 4-6 Stunden auf 125-135°C erhitzt und während 0-2 Stunden bei dieser Temperatur beläßt.

3. Verfahren zur Herstellung von Salzen der Polyasparaginamidsäure nach Anspruch 1, dadurch gekennzeichnet, daß man Maleinsäure und Ammoniak innerhalb von 4-6 Stunden auf 125-135°C erhitzt, während 0-2 Stunden bei dieser Temperatur beläßt und nach dem Abkühlen auf 100-120°C wäßrige Lösungen oder Aufschlämmungen von Metall- oder Ammoniumhydroxiden zufügt.

## Claims

1. Process for the preparation of polyaspartic acid and its salts, characterised in that maleic acid and ammonia are reacted in a molar ratio of 1:1-1.5 at 125-140°C, and, if appropriate, the acids are converted into their salts.

2. Process for the preparation of polyaspartic acid according to Claim 1, characterised in that maleic acid and ammonia are heated to 125-135°C in the course of 4-6 hours and are kept at this temperature for 0-2 hours.

3. Process for the preparation of salts of polyaspartic acid according to Claim 1, characterised in that maleic acid and ammonia are heated to 125-135°C in the course of 4-6 hours and are kept at this temperature for 0-2 hours, and, after cooling to 100-120°C, aqueous solutions or suspensions of metal hydroxides or ammonium hydroxides are added.

## Revendications

1. Procédé de production d'acide polyasparaginamidique et de ses sels, caractérisé en ce qu'on fait réagir de l'acide maléique et de l'ammoniac dans le rapport molaire de 1:1-1,5 à 125-140°C et on transforme éventuellement les acides en leurs sels.

2. Procédé de production d'acide polyasparaginamidique suivant la revendication 1, caractérisé en ce qu'on chauffe de l'acide maléique et de l'ammoniac en 4 à 6 heures à 125-135°C et on les maintient à cette température pendant 0 à 2 heures.

3. Procédé de production de sels d'acide polyasparaginamidique suivant la revendication 1, caractérisé en ce qu'on chauffe de l'acide maléique et de l'ammoniac en 4 à 6 heures à 125-135°C, on les maintient à cette température pendant 0 à 2 heures et, après refroidissement à 100-120°C, on ajoute des solutions ou suspensions aqueuses d'hydroxydes de métaux ou d'ammonium.